# EUROPEAN PATENT APPLICATION

(11) **EP 4 391 509 A1**
(43) Date of publication of application: **26.06.2024**
(21) Application number: 22866281.3
(22) Date of filing: 01.08.2022
(51) Int. Cl.: H04M 3/493

(54) **CUSTOMER SERVICE BUSINESS IMPLEMENTATION METHOD AND APPARATUS, COMPUTER DEVICE, AND STORAGE MEDIUM**

(30) Priority: 10.09.2021 CN 202111062684
(71) Applicant: ZTE Corporation, Shenzhen, Guangdong 518057 (CN)
(72) Inventor: MIAO, Yongsheng, Shenzhen, Guangdong 518057 (CN); HONG, Jun, Shenzhen, Guangdong 518057 (CN); SHI, Liang, Shenzhen, Guangdong 518057 (CN); ZHANG, Lu, Shenzhen, Guangdong 518057 (CN)
(74) Representative: Canzler & Bergmeier Patentanwälte Partnerschaft mbB
(86) International application number: PCT/CN2022/109409
(87) International publication number: WO 2023/035807

(57) **Abstract**

A customer service business implementation method and system, a computer device, and a readable medium. The method is applied to a customer service system, and comprises: in the case that a customer service system and a user terminal perform audio/video interaction through an audio/video channel, sending first multimedia information to an IMS to request the IMS to establish a data channel between the IMS and the user terminal and send the first multimedia information to the user terminal through the data channel, wherein the first multimedia information is multimedia interaction information that has been synchronized and associated with audio/video information sent through the audio/video channel, and is used for prompting a user of the user terminal to feed back information. The customer service business implementation solution of the present application implements more intuitive interaction with a user, more lively user experience, and more efficient business handling, and facilities intuitive and vivid recommendation of products and services by enterprise users.

## Description

### CROSS-REFERENCE TO RELATED APPLICATIONS

The present disclosure claims priority from Chinese patent application No. 202111062684.4 titled "CUSTOMER SERVICE BUSINESS IMPLEMENTATION METHOD and APPARATUS, COMPUTER DEVICE, and STORAGE MEDIUM" filed with the China National Intellectual Property Administration on September 10, 2021, the entirety of which is incorporated herein by reference.

### TECHNICAL FIELD

Embodiments of the present disclosure relate to, but are not limited to, the field of communication technology, and specifically relate to a customer service business implementation method and apparatus, a computer device, and a readable medium.

### BACKGROUND

As defined by the 3rd Generation Partnership Project (3GPP), the IP Multimedia Core Network Subsystem (IMS) can implement IP-based multimedia sessions, including multimedia business such as voice, video, and the like. The IMS network may provide not only voice calls for a fixed terminal, but also voice calls for a mobile terminal, such as voice over long term evolution (VoLTE), voice over next radio (VoNR), and voice over WiFi (VoWiFi) calls.

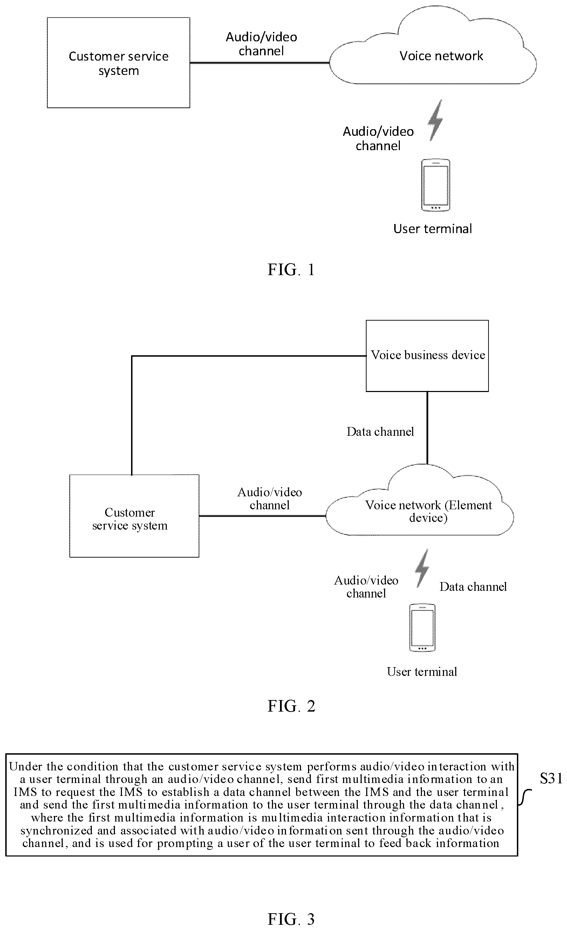

The customer service business has become much matured after decades of development. Operators, enterprises and individuals are all used to the service mode of customer service hotline. Various fixed and mobile terminals can be communicated with a customer service system through an IMS in a real-time voice network, thereby implementing customer service hotline service. In the existing art, as shown in FIG. 1, a customer service system is connected to a user terminal over a voice network of a telecom operator through an audio/video channel, so as to implement voice intercommunication.

The sole communication mode between the customer service system and the user terminal can transmit only audio/video signals, and lacks diversified interaction means. In view of the experience, the customer service system basically depends on the voice service, and the Interactive Voice Response (IVR) navigation is lengthy and difficult to traverse, making it difficult to sufficiently play a guiding role.

The customer service system in the existing art has low communication efficiency with users when handling of business, leading to reduced user enthusiasm and making it hard to improve the satisfaction degree, while for enterprise users, products and services cannot be intuitively and vividly recommended to users, and business expansion of the enterprise is severely restricted.

### SUMMARY

The present disclosure provides a customer service business implementation method and apparatus, a computer device, and a readable medium.

In a first aspect, an embodiment of the present disclosure provides a customer service business implementation method applied to a customer service system, wherein the method includes: under the condition that the customer service system performs audio/video interaction with a user terminal through an audio/video channel, sending first multimedia information to an IP multimedia system (IMS)to request the IMS to establish a data channel between the IMS and the user terminal and send the first multimedia information to the user terminal through the data channel, wherein the first multimedia information is multimedia interaction information that is synchronized and associated with audio/video information sent through the audio/video channel, and is used for prompting a user of the user terminal to feed back information.

In another aspect, an embodiment of the present disclosure further provides a customer service business implementation method applied to a user terminal, wherein the method includes: under the condition that the customer service system performs audio/video interaction with a user terminal through an audio/video channel, receiving first multimedia information, wherein the first multimedia information is multimedia interaction information that is synchronized and associated with audio/video information sent through the audio/video channel, which is sent to an IP multimedia system (IMS) from the customer service system, and then sent from the IMS through a data channel; sending, upon acquiring first feedback information, the first feedback information through the data channel, wherein the first feedback information is multimedia information fed back by the user of the user terminal according to the first multimedia information; and sending, upon acquiring second feedback information, the second feedback information through the audio/video channel, wherein the second feedback information is audio/video information fed back by a user of the user terminal according to the audio/video information delivered through the audio/video channel.

In yet another aspect, an embodiment of the present disclosure further provides a customer service system, including a first push module configured to, under the condition that the customer service system performs audio/video interaction with a user terminal through an audio/video channel, send first multimedia information to an IP multimedia system (IMS) to request the IMS to establish a data channel between the IMS and the user terminal and send the first multimedia information to the user terminal through the data channel, wherein the first multimedia information is multimedia interaction information that is synchronized and associated with audio/video information sent through the audio/video channel, and is used for prompting a user of the user terminal to feed back information.

In still another aspect, an embodiment of the present disclosure further provides a user terminal, including: a first receiving module, a second receiving module, a first sending module, and a second sending module. The first receiving module is configured to receive first multimedia information under the condition that the second receiving module performs audio/video interaction with a customer service system through an audio/video channel, wherein the first multimedia information is multimedia interaction information that is synchronized and associated with audio/video information sent through the audio/video channel, which is sent to an IP multimedia system (IMS) from the customer service system, and then sent from the IMS through a data channel; the first sending module is configured to send, upon acquiring first feedback information, the first feedback information through the data channel, wherein the first feedback information is multimedia information fed back by the user of the user terminal according to the first multimedia information; and the second sending module is configured to send, upon acquiring second feedback information, the second feedback information through the audio/video channel, wherein the second feedback information is audio/video information fed back by a user of the user terminal according to the audio/video information delivered through the audio/video channel.

In still another aspect, an embodiment of the present disclosure further provides a computer device, including: at least one processor; and a storage means having one or more programs stored thereon which, when executed by the at least one processor, cause the at least one processor to implement the customer service business implementation method as described above.

In yet another aspect, an embodiment of the present disclosure further provides a computer-readable medium having a computer program stored thereon which, when executed by a processor, causes the customer service business implementation method as described above to be implemented.

### BRIEF DESCRIPTION OF DRAWINGS

FIG. 1 is a schematic diagram of a system architecture in the existing art;
FIG. 2 is a schematic diagram of a system architecture according to an embodiment of the present disclosure;
FIG. 3 is a schematic flowchart of a customer service business implementation method according to an embodiment of the present disclosure;
FIG. 4 is a schematic flowchart of a customer service business implementation method according to another embodiment of the present disclosure;
FIG. 5 is a schematic flowchart of a customer service business implementation method according to another embodiment of the present disclosure;
FIG. 6 is a schematic diagram of a system architecture in an application scenario according to an embodiment of the present disclosure;
FIG. 7 is a schematic signaling flow of a customer service business implementation method in an application scenario according to an embodiment of the present disclosure;
FIG. 8 is a schematic diagram of a system architecture in another application scenario according to an embodiment of the present disclosure;
FIG. 9 is a schematic signaling flow of a customer service business implementation method in another application scenario according to an embodiment of the present disclosure;
FIG. 10 is a schematic diagram of a system architecture in another application scenario according to an embodiment of the present disclosure;
FIG. 11 is a schematic signaling flow of a customer service business implementation method in another application scenario according to an embodiment of the present disclosure;
FIG. 12 is a schematic flowchart of a customer service business implementation method according to an embodiment of the present disclosure;
FIG. 13 is a block diagram of a customer service system according to an embodiment of the present disclosure;
FIG. 14 is a block diagram of a customer service system according to another embodiment of the present disclosure;
FIG. 15 is a block diagram of a customer service system according to another embodiment of the present disclosure;
FIG. 16 is a block diagram of a user terminal according to an embodiment of the present disclosure; and
FIG. 17 is a block diagram of a user terminal according to another embodiment of the present disclosure.

### DETAIL DESCRIPTION OF EMBODIMENTS

Example embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Embodiments described herein may be described with reference to plan and/or sectional views in idealized representations of the present disclosure. Accordingly, the example illustrations may be modified in accordance with the manufacturing process and/or the tolerance. Therefore, the embodiments are not limited to the embodiments shown in the drawings, but further include modifications of configurations formed based on a manufacturing process. Therefore, the regions illustrated in the figures have schematic properties, and the shapes of the regions shown in the figures illustrate specific shapes of regions of elements, but are not intended to be limitative.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

An embodiment of the present disclosure provides a customer service business implementation method which is applied to a system as shown in FIG. 2. As shown in FIG. 2, the system includes a customer service system, a network element device in a voice network, a voice business device, and a user terminal. The customer service system needs to deploy the voice business device in the voice network, while the voice business device is connected to the customer service system and the network element device in the voice network respectively to support transmission of multimedia information. The voice network includes a fixed voice network and a VoLTE/VoNR/VoWiFi voice network, and the network element device in the voice network may be an IMS network element which, for example, may include an IMS network device such as a VoLTE Application Server (AS), a VoLTE Session Border Controller (SBC), or an Interrogating/Serving-call Session Control Function (I/S-CSCF) entity, and support Data Channel (DC) related functions. The user terminal may support a data channel, and may include a fixed terminal or a mobile terminal. In the case where a chip in the user terminal does not support the data channel, a native Software Development Kit (SDK) is installed before leaving factory to support the data channel, thereby avoiding installation/uninstallation of an application program at the user terminal.

As shown in FIG. 3, the customer service business implementation method according to the embodiments of the present disclosure is applied to a customer service system, and includes the following operation 31.

At operation 31, under the condition that the customer service system performs audio/video interaction with a user terminal through an audio/video channel, sending first multimedia information to an IP Multimedia System (IMS) to request the IMS to establish a data channel between the IMS and the user terminal and send the first multimedia information to the user terminal through the data channel, where the first multimedia information is multimedia interaction information that is synchronized and associated with audio/video information sent through the audio/video channel, and is used for prompting a user of the user terminal to feed back information.

In this operation, under the condition that the customer service system performs audio/video interaction with a user terminal through an audio/video channel, for example, when the customer service system performs IVR with a user terminal through an audio/video channel, first multimedia information pushed by the customer service system is delivered to an IMS in the voice network through a data channel, and then sent to the user terminal from the IMS through the data channel.

To improve the communication efficiency between the customer service system and the user, as well as the service satisfaction degree, Over the Top (OTT) applications are adopted in the existing art. While supporting voice calls, the customer service system may further perform interaction of files, pictures and positions. However, the Quality of Service (QoS) of the OTT voice is not guaranteed, while a special application program has to be installed, which brings inconvenience to popularization and application. In the embodiments of the present disclosure, when the first multimedia information is pushed to the user terminal, the first multimedia information is pushed by a network element device (i.e., an IMS network element device) in a voice network of a telecom operator. In this manner, the operator can improve the quality of service, and thus guarantee the QoS.

In the existing art, the customer service system performs IVR with a user of the user terminal through an audio/video channel, and after receiving a menu or a voice IVR navigation broadcast, the user terminal performs interaction with the customer service system through a Dual Tone Multi Frequency (DTMF) voice channel via a conventional key on the user terminal. In this manner, intuitive and deep communication between the customer service system and the user of the user terminal is impossible, and links of the service are fragmentary, making it impossible to offer an integrated service for the user.

In the customer service business implementation method according to the embodiments of the present disclosure, the conventional IVR navigation function is reserved in the customer service system, while the first multimedia information can be pushed to the user terminal through the data channel, and the first multimedia information is matched with the audio/video information sent through the audio/video channel. In this manner, the customer service system can implement more intuitive interaction with a user, enable more lively user experience and more efficient business handling, and facilitate intuitive and vivid recommendation of products and services by enterprise users. The customer service system can integrate various scattered business and provide a unified entrance, so that the user can enjoy "one-stop" service by simply dialing one customer service number through the user terminal, thereby significantly improving the business experience. Therefore, the functions of the customer service system are enhanced and improved, and improvement of the service quality and the operation level is facilitated.

In some embodiments, the first multimedia information may include an interactive menu, a file, an emoji, an action, or the like, such as text, a picture, a file, a location, a Hyper Text Markup Language (HTML) 5 page, or the like.

An embodiment of the present disclosure provides a customer service business implementation method applied to a customer service system, which includes: under the condition that the customer service system performs audio/video interaction with a user terminal through an audio/video channel, sending first multimedia information to an IMS to request the IMS to establish a data channel between the IMS and the user terminal and send the first multimedia information to the user terminal through the data channel, where the first multimedia information is multimedia interaction information that is synchronized and associated with audio/video information sent through the audio/video channel, and is used for prompting a user of the user terminal to feed back information. The customer service business implementation solution in the embodiment of the present disclosure can implement more intuitive interaction with a user, enable more lively user experience and more efficient business handling, and facilitate intuitive and vivid recommendation of products and services by enterprise users. The customer service system can integrate various scattered business, thereby enhancing and improving the functions of the customer service system, and facilitating improvement of the service quality and the operation level.

Since the first multimedia information is interaction information, the user terminal can perform multimedia information interaction with the customer service system, and since the call between the customer service system and the user terminal is performed through the audio/video channel in the voice network, while the multimedia information push and the user terminal interaction are performed through the data channel, routes of the audio/video channel and the data channel in the voice network are completely independent. In the implementation process of business of the customer service system, the audio/video channel and the data channel should work collaboratively to ensure correctness and cooperativity of the business logic. In addition, to ensure compatibility with a conventional customer service system, after receiving the first multimedia information (such as a visual menu) or audio/video information (such as voice IVR navigation broadcast), the user terminal may feed back information through the data channel or through the audio/video channel. Therefore, a correct association relationship should be established between the information fed back through the data channel and the information fed back through the audio/video channel.

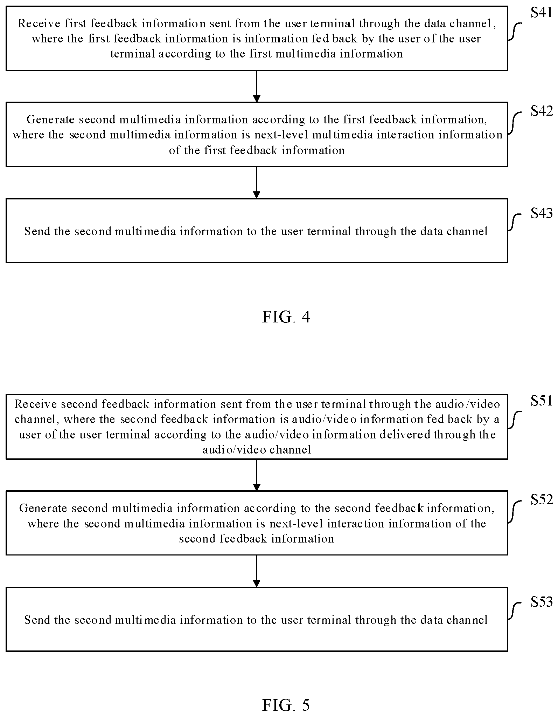

Therefore, in some embodiments, as shown in FIG. 4, after sending the first multimedia information to the IMS to request the IMS to establish the data channel between the IMS and the user terminal and send the first multimedia information to the user terminal through the data channel (i.e., operation 31), the customer service business implementation method may further include the following operations 41 to 43.

At operation 41, receiving first feedback information sent from the user terminal through the data channel, where the first feedback information is information fed back by the user of the user terminal according to the first multimedia information.

In this operation, the customer service system receives first feedback information, where the first feedback information is sent to the user terminal by the user of the user terminal through a touch screen and sent from the user terminal through the data channel, and the first feedback information is multimedia information feedback to the first multimedia information, for example, feedback to a selection result of a visual menu. In this manner, multimedia information interaction in various forms can be implemented between the customer service system and the user terminal.

At operation 42, generating second multimedia information according to the first feedback information, and generating first audio/video information that is synchronized and associated with the second multimedia information, where the second multimedia information is next-level multimedia interaction information of the first feedback information.

In this operation, the customer service system determines a subsequent range function according to the feedback from the user terminal, generates next-level interaction information, such as a next-level push submenu (e.g., a HTML5 page), and generates, after generating the second multimedia information, first audio/video information (e.g., next-level IVR information) matched with the second multimedia information.

At operation 43, sending the second multimedia information to the user terminal through the data channel, and sending the first audio/video information to the user terminal through the audio/video channel.

In this operation, the customer service system sends the next-level multimedia interaction information to the user terminal through the data channel, and sends the next-level audio/video interaction information to the user terminal through the audio/video channel.

It can be seen from operations 41 to 43 that the interaction of multi-level interaction information between the customer service system and the user terminal can be implemented in different ways. Even if the user terminal feeds back to the customer service system multimedia information instead of audio/video information for the selection result, the customer service system can still generate next-level audio/video information based on the multimedia information fed back by the user, and further push the next-level audio/video information to the user terminal.

Since the audio/video channel has already been established between the customer service system and the user terminal, the customer service system can further perform audio/video information interaction with the user terminal through the audio/video channel. As shown in FIG. 5, in some embodiments, after sending the first multimedia information to the IMS to request the IMS to establish the data channel between the IMS and the user terminal and send the first multimedia information to the user terminal through the data channel (i.e., operation 31), the customer service business implementation method may further include the following operations 51 to 53.

At operation 51, receiving second feedback information sent from the user terminal through the audio/video channel, where the second feedback information is audio/video information fed back by a user of the user terminal according to the audio/video information delivered through the audio/video channel.

Since the customer service system has sent the audio/video information to the user terminal through the audio/video channel before, the customer service system receives the second feedback information in this operation. The second feedback information is sent to the user terminal by the user of the user terminal through a key, and then sent from the user terminal through the audio/video channel using a Dual Tone Multi Frequency (DTMF) signal. The second feedback information may be IVR response information, for example, feedback information for a selection result of IVR voice navigation (such as DTMF feedback information).

At operation 52, generating second audio/video information according to the second feedback information, and generating third multimedia information that is synchronized and associated with the second audio/video information, where the second audio/video information is next-level interaction information of the second feedback information.

In this operation, the customer service system determines a subsequent range function according to the feedback from the user terminal, generates next-level interaction information, for example, next-level audio/video information (i.e., the second audio/video information, such as IVR information), and generates, after generating the second audio/video information, third multimedia information (e.g., next-level push submenu) synchronized and associated with the second audio/video information.

At operation 53, sending the second audio/video information to the user terminal through the audio/video channel, and sending the third multimedia information to the user terminal through the data channel.

In this operation, the customer service system sends the next-level audio/video interaction information to the user terminal through the audio/video channel, and sends the next-level multimedia interaction information to the user terminal through the data channel.

It can be seen from operations 51 to 53 that the interaction of multi-level interaction information between the customer service system and the user terminal can be implemented in different ways. Even if the user terminal feeds back to the customer service system audio/video information instead of multimedia information for the selection result, the customer service system can still generate next-level multimedia information based on the audio/video information fed back by the user, and further push the next-level multimedia information to the user terminal.

It should be noted that the user terminal may send the first feedback information through the data channel, and/or send the second feedback information through the audio/video channel.

To adapt to customer service systems with different processing capabilities and different application scenarios, different multimedia information push schemes are proposed in the embodiments of the present disclosure.

In some embodiments, the customer service system pushes multimedia information and receives feedback information from the user terminal by means of the voice business device and the voice network of the telecom operator. Accordingly, sending the first multimedia information to the IMS to request the IMS to establish the data channel between the IMS and the user terminal and send the first multimedia information to the user terminal through the data channel (i.e., operation 31) includes: sending a first push request carrying the first multimedia information to a voice business device, where the first push request is configured to instruct the voice business device to establish a first data channel between the voice business device and the IMS, send the first multimedia information to the IMS through the first data channel, and enable the voice business device to instruct the IMS to establish a second data channel between the IMS and the user terminal, so that the IMS sends the first multimedia information to the user terminal through the second data channel. In other words, after the customer service system sends the first push request carrying the first multimedia information to the voice business device, and the voice business device acquires the first multimedia information, a first data channel between the voice business device and the IMS is established, through which the first multimedia information is sent to the IMS; and after the IMS receives the first multimedia information, a second data channel between the IMS and the user terminal is established, through which the first multimedia information is sent to the user terminal, so that the customer service system can push the multimedia information to the user terminal.

Accordingly, in some embodiments, receiving the first feedback information sent from the user terminal through the data channel (i.e., operation 41) includes: receiving a first push response sent from the voice business device, acquiring first feedback information carried therein which has been sent to the IMS from the user terminal through the second data channel, and sending the first feedback information to the voice business device from the IMS through the first data channel. Sending the second multimedia information to the user terminal through the data channel (i.e., operation 43) includes: sending a second push request carrying the second multimedia information to the voice business device, where the second push request is configured to instruct the voice business device to send the first multimedia information to the IMS through the second data channel, so that the IMS sends the second multimedia information to the user terminal through the second data channel. In other words, the user terminal sends the first feedback information (i.e., information fed back by the user of the user terminal according to the first multimedia information) to the IMS through the second data channel, the IMS sends the first feedback information to the voice business device through the first data channel, the voice business device sends a first push response carrying the first feedback information to the customer service system, and the customer service system acquires the first feedback information therein. After the customer service system generates the second multimedia information (i.e., next-level interaction information of the first feedback information) according to the first feedback information, a second push request carrying the second multimedia information is sent to the voice business device, the voice business device sends the first multimedia information to the IMS through the second data channel, and the IMS, after receiving the second multimedia information, sends the second multimedia information to the user terminal through the first data channel, so that the customer service system can further push the next-level multimedia information based on the feedback from the user terminal.

In some embodiments, the customer service system includes a Signal Conversion Unit (SCU). In this case, sending the first push request carrying the first multimedia information to the voice business device includes: sending the first push request carrying the first multimedia information to the voice business device through the SCU; and/or receiving the first push response sent from the voice business device includes: receiving the first push response sent from the voice business device through the SCU; and/or sending the second push request carrying the second multimedia information to the voice business device includes: sending the second push request carrying the second multimedia information to the voice business device through the SCU. It should be noted that in the case that the customer service system is deployed with the SCU, original business modules in the customer service system remain unchanged.

In some embodiments, instead of using the voice business device, the customer service system may directly push multimedia information and receive feedback information from the user terminal by means of the voice network of the telecom operator. Accordingly, sending the first multimedia information to the IMS to request the IMS to establish the data channel between the IMS and the user terminal and send the first multimedia information to the user terminal through the data channel (i.e., operation 31) includes: sending a third push request carrying the first multimedia information to the IMS through a pre-established third data channel between the customer service system and the IMS, where the third push request is configured to instruct the IMS to establish a fourth data channel between the IMS and the user terminal, and send the first multimedia information to the user terminal through the fourth data channel. In other words, a third data channel is pre-established between the customer service system and the IMS, through which the customer service system sends a third push request carrying the first multimedia information to the IMS, and after the IMS acquires the first multimedia information, a fourth data channel is established between the IMS and the user terminal, through which the first multimedia information is sent to the user terminal, so that the customer service system can push the multimedia information to the user terminal.

Accordingly, in some embodiments, receiving the first feedback information sent from the user terminal through the data channel (i.e., operation 41) includes: receiving a third push response sent from the IMS, and acquiring first feedback information carried therein which has been sent to the IMS from the user terminal through the fourth data channel. Sending the second multimedia information to the user terminal through the data channel (i.e., operation 43) includes: sending a fourth push request carrying the second multimedia information to the IMS, where the fourth push request is configured to instruct the IMS to send the second multimedia information to the user terminal through the fourth data channel. That is, the user terminal sends the first feedback information (i.e., information fed back by the user of the user terminal according to the first multimedia information) to the IMS through the fourth data channel, the IMS sends a third push response carrying the first feedback information to the customer service system through the third data channel, and the customer service system acquires the first feedback information therein. After the customer service system generates the second multimedia information (i.e., next-level interaction information of the first feedback information) according to the first feedback information, a fourth push request carrying the second multimedia information is sent to the IMS through the third data channel, and the IMS, after acquiring the second multimedia information therein, sends the second multimedia information to the user terminal through the first data channel, so that the customer service system can further push the next-level multimedia information based on the feedback from the user terminal.

To clearly illustrate the technical solution proposed in the embodiments of the present disclosure, the following describes the customer service business implementation method of the present disclosure in detail with reference to three specific examples.

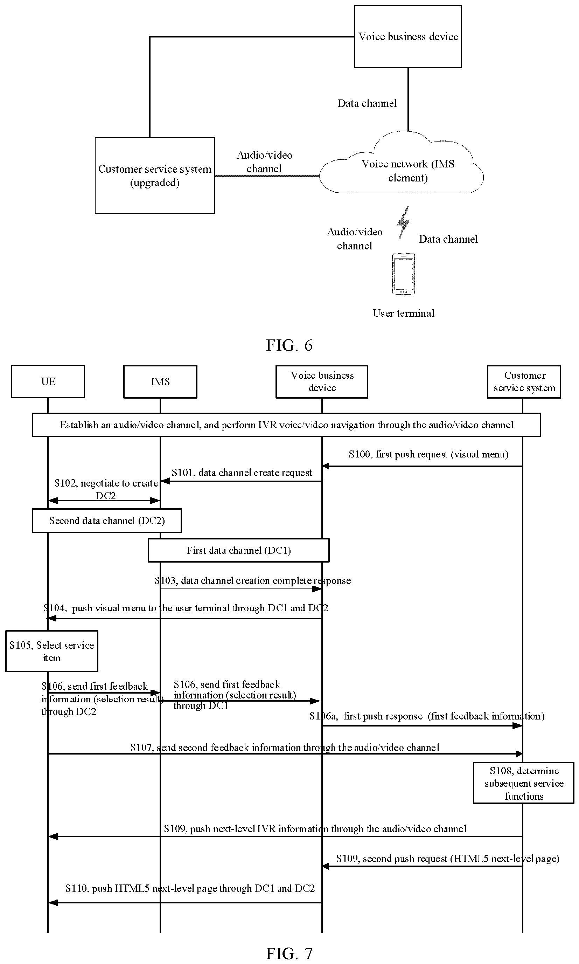

FIG. 6 is a schematic diagram of a system architecture in an application scenario according to an embodiment of the present disclosure, and FIG. 7 is a schematic signaling flow of a customer service business implementation method in the scenario shown in FIG. 6. As shown in FIGs. 6 and 7, the customer service system pushes multimedia information and receives feedback information from the user terminal by means of the voice business device and the voice network of the telecom operator. In this scenario, the customer service system can perform signaling/media intercommunication with the IMS in the voice network through the audio/video channel, and can be interfaced with the voice business device, to push multimedia information such as a HTML5 page, a visual menu, or the like, and to receive feedback information from the user terminal. It should be noted that in a first application scenario, the customer service system may implement software function upgrading and modification on a conventional customer service system.

Under the condition that an audio/video channel has been established between a customer service system and the user terminal, through which IVR voice/video navigation is performed, as shown in FIG. 7, the customer service business implementation method includes the following operations 100 to 110.

At operation 100, the customer service system sends a first push request to the voice business device, where the first push request carries a visual menu (e.g., HTML5) containing content matched with the IVR voice/video navigation.

In this operation, if the customer service system is deployed with an SCU, the SCU sends the first push request to the voice business device.

At operation 101, the voice business device sends a data channel create request to the IMS, to request the IMS to create a data channel.

At operation 102, the IMS negotiates with the user terminal to create a second Data Channel (DC2).

At operation 103, after the IMS creates the first Data Channel (DC1) to the voice business device, a data channel creation complete response is returned to the voice business device, operation 103.

At operation 104, the voice business device pushes a visual menu to the user terminal through the first Data Channel (DC1) and the second Data Channel (DC2).

It should be noted that in some application scenarios, multimedia information, such as an action, an emoji, a file, a pictures, and the like, may also be pushed based on DC1 and DC2.

At operation 105, a user of the user terminal selects a service item on a terminal interface through a touch screen or a key, so as to implement information interaction in various forms between the user terminal and the customer service system.

At operation 106, the first feedback information (selection result) sent by the user through the touch screen is sent from the user terminal to the IMS through the second Data Channel (DC2), and then forwarded to the voice business device by the IMS through the first Data Channel (DC1).

At operation 106a, the voice business device sends a first push response carrying the first feedback information to the customer service system.

At operation 107, the second feedback information sent by the user through the key is sent from the user terminal to the customer service system through the audio/video channel using a DTMF signal.

It should be noted that the operations 106, 106a and operation 107 may be executed alternatively.

At operation 108, the customer service system associates and coordinates the IVR information and the visual menu to determine subsequent service functions, such as further playing corresponding IVR voice or pushing a submenu.

In this operation, upon receiving the first push response carrying the first feedback information, the customer service system generates an HTML5 next-level page from the first feedback information, and generates a next-level IVR information that is synchronized and associated with the HTML5 next-level page; and upon receiving the second feedback information, the customer service system generates next-level IVR information according to the second feedback information, and generates an HTML5 next-level page synchronized and associated with the next-level IVR information.

At operation 109, the customer service system sends a second push request to the voice business device to push the HTML5 next-level page, and the customer service system pushes the next-level IVR information to the user terminal through the audio/video channel.

At operation 110, the voice business device pushes the HTML5 next-level page to the user terminal through the first Data Channel (DC1) and the second Data Channel (DC2).

After the user terminal establishes a call with the customer service system, the customer service system broadcasts IVR voice/video navigation to the user terminal, while pushing a visual menu to the user terminal through the voice business device. The user selects a service item on the user terminal interface through a touch screen or a key, the customer service system may push a corresponding HTML5 next-level page to the user terminal through the voice business device based on the selection result of the user, or may broadcast a next-level IVR voice/video navigation to the user terminal through the audio/video channel based on the selection of the user.

The examples shown in FIGs. 6 to 7 have the following characteristics:
the customer service system supports associated and collaborative synchronization of the IVR navigation and the HTML5 menus, supports generation and transmission of multimedia information such as a HTML5 menu, and supports interaction with a voice device to complete pushing of multimedia such as a menu and collection of business selections at the user terminal; and the customer service system supports double selection of the user terminal, and supports navigation services in the forms of both audio/video and visual menu. The user may make a selection through a visual menu on a touch screen, or through a key. The customer service system can identify the selection result of the user in either case. The customer service system supports pushing multimedia information, and supports matching and generating a next-level HTML5 page and voice based on the selection result of the user, and sending the page and voice to the user terminal. In some application scenarios, the customer service system may further push multimedia information such as an action, an emoji, a file, a picture and the like to the user terminal. For a customer service system deployed with a SCU, there is no need to upgrade and modify a conventional customer service system.

The voice business device supports data channel establishment and multimedia information transmission.

The user terminal supports a data channel, and supports business selection through a touch screen or a key. The user terminal may include various fixed terminals or various mobile terminals. Under the condition that a chip in the user terminal does not support the data channel, a native SDK is installed in the terminal before leaving factory to support the data channel technology, so that there is no need to install/uninstall a special application program at the user terminal.

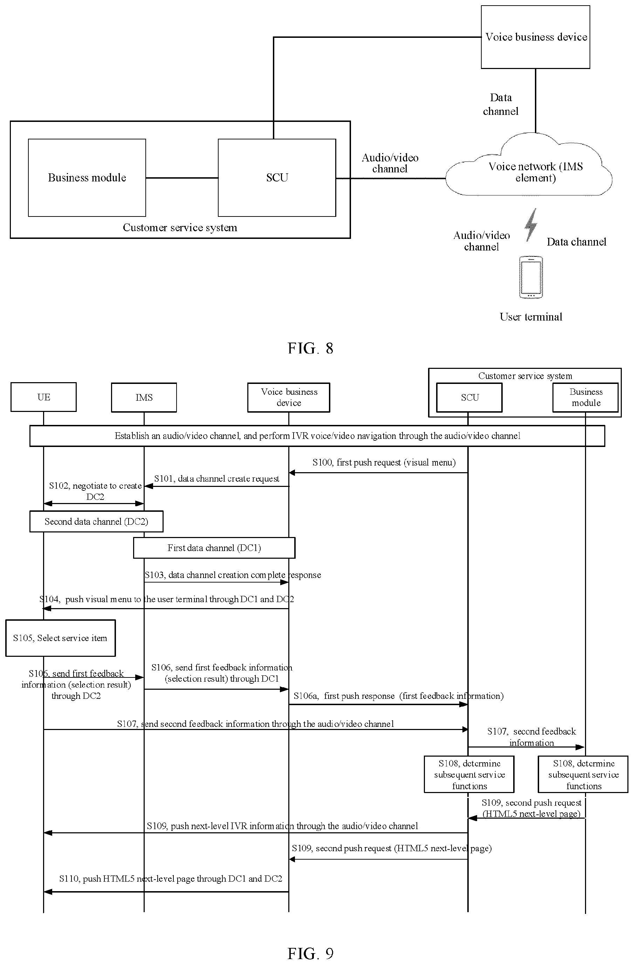

FIG. 8 is a schematic diagram of a system architecture in another application scenario according to an embodiment of the present disclosure, and FIG. 9 is a schematic signaling flow of a customer service business implementation method in the scenario shown in FIG. 8. This application scenario differs from the foregoing application scenario in that the foregoing application scenario involves upgrading and modification on the conventional customer service system, while this application scenario is implemented by deploying an additional SCU without any change of the conventional customer service system. The SCU is interfaced with the voice business device and the voice network, and configured to perform conversion and association between IVR information (such as DTMF) and multimedia information, and complete generation and pushing of the multimedia information and reception of the feedback information from the user terminal.

As shown in FIG. 9, a flow of the customer service business implementation method in this application scenario differs from the customer service business implementation method in the foregoing application scenario in that:

In operation 106a, the first push response is sent to the SCU of the customer service system, and in operation 108, the SCU associates and coordinates the IVR information and the HTML5 next-level page generated from the first feedback information obtained in operation 106a.

In operation 107, the second feedback information is sent from the user terminal to the SCU through the audio/video channel, and forwarded by the SCU to a business module in the customer service system, and in operation 108, the service module of the customer service system associates and coordinates multimedia information and the next-level IVR information generated from the second feedback information obtained in operation 107.

At operation 109, the service module of the customer service system sends the next-level IVR information to the SCU, and the SCU pushes the next-level IVR information to the user terminal through the audio/video channel.

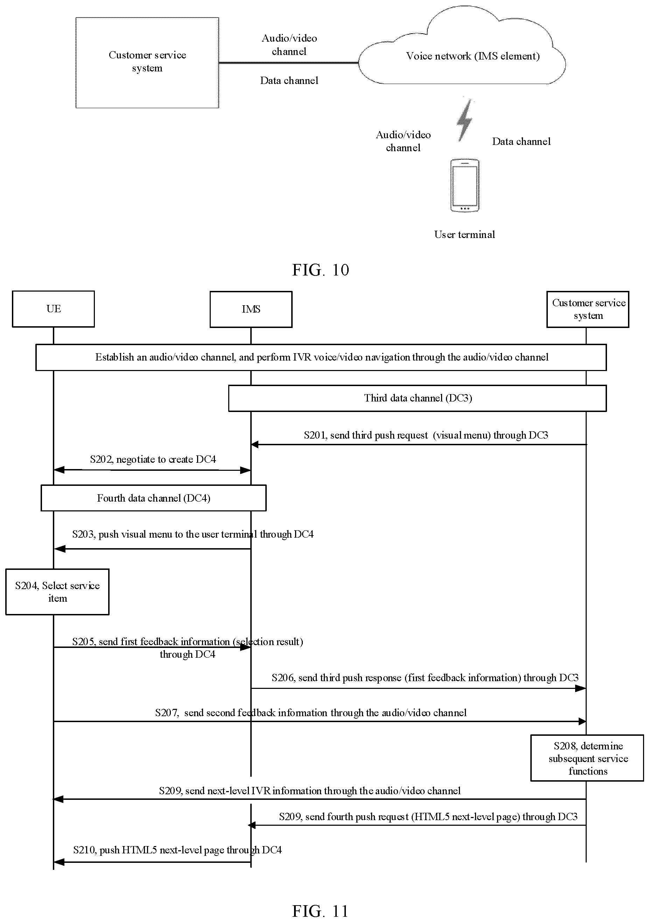

FIG. 10 is a schematic diagram of a system architecture in another application scenario according to an embodiment of the present disclosure. FIG. 11 is a schematic signaling flow of a customer service business implementation method in the scenario shown in FIG. 10. As shown in FIGs. 10 and 11, the customer service system directly pushes multimedia information and receives feedback information from the user terminal by means of the voice network of the telecom operator. In this scenario, the customer service system can perform intercommunication with the IMS in the voice network through the audio/video channel and the data channel, and can be interfaced with the voice business device through the data channel; and a data channel is established between the voice business device and the IMS (in the embodiments of the present disclosure, the customer service business is implemented without participation of the voice business device in this scenario), to push multimedia information such as a HTML5 page, a visual menu, or the like, and to receive feedback information from the user terminal.

Under the condition that an audio/video channel has been established between a customer service system and the user terminal, through which IVR voice/video navigation is performed, as shown in FIG. 11, the customer service business implementation method includes the following operations 201 to 210.

At operation 201, the customer service system sends a third push request to the IMS through a third Data Channel (DC3), where the third push request carries a visual menu (e.g., HTML5) containing content matched with the IVR voice/video navigation.

At operation 202, the IMS negotiates with the user terminal to create a fourth Data Channel (DC4).

At operation 203, the IMS pushes the visual menu to the user terminal through the fourth Data Channel 1 (DC4).

It should be noted that in some application scenarios, multimedia information, such as an action, an emoji, a file, a picture, and the like, may also be pushed based on DC4 and DC3.

At operation 204, a user of the user terminal selects a service item on a terminal interface through a touch screen or a key, so as to implement information interaction in various forms between the user terminal and the customer service system.

At operation 205, the first feedback information (selection result) sent by the user through the touch screen is sent from the user terminal to the IMS through the fourth Data Channel (DC4).

At operation 206, the IMS sends a third push response carrying the first feedback information to the customer service system through the third Data Channel (DC3).

At operation 207, the second feedback information sent by the user through the key is sent from the user terminal to the customer service system through the audio/video channel using a DTMF signal.

It should be noted that operation 207 and operation 206 may be executed alternatively.

At operation 208, the customer service system associates and coordinates the IVR information and the visual menu to determine subsequent service functions, such as further playing corresponding IVR voice or pushing a submenu.

In this operation, upon receiving the third push response carrying the first feedback information, the customer service system generates an HTML5 next-level page from the first feedback information, and generates a next-level IVR information that is synchronized and associated with the HTML5 next-level page; and upon receiving the second feedback information, the customer service system generates next-level IVR information according to the second feedback information, and generates an HTML5 next-level page synchronized and associated with the next-level IVR information.

At operation 209, the customer service system sends a fourth push request to the IMS through the third Data Channel (DC3) to push the HTML5 next-level page, and the customer service system pushes the next-level IVR information to the user terminal through the audio/video channel.

At operation 210, the IMS pushes the HTML5 next-level page to the user terminal through a fourth Data Channel (DC4).

After the user terminal establishes a call with the customer service system, instead of using the voice business device, the customer service system may directly push the visual menu to the user terminal through a voice network. The user selects a service item on the user terminal interface through a touch screen or a key, the customer service system may push a corresponding HTML5 next-level page to the user terminal through the voice business device based on the selection result of the user, or may broadcast a next-level IVR voice/video navigation to the user terminal through the audio/video channel based on the selection of the user.

The examples shown in FIGs. 8 to 9 have the following characteristics:
the customer service system supports associated and collaborative synchronization of the IVR navigation and the HTML5 menus, supports generation and transmission of multimedia information such as a HTML5 menu, and supports interaction with a voice device to complete pushing of multimedia such as a menu and collection of business selections at the user terminal; and the customer service system supports double selection of the user terminal, and supports navigation services in the forms of both audio/video and visual menu. The user may make a selection through a visual menu on a touch screen, or through a key. The customer service system can identify the selection result of the user in either case. The customer service system supports pushing multimedia information, and supports matching and generating a next-level HTML5 page and voice based on the selection result of the user, and sending the page and voice to the user terminal. In some application scenarios, the customer service system may further push multimedia information such as an action, an emoji, a file, a picture and the like to the user terminal.

The voice business device supports establishment of a data channel, and the multimedia information is not transmitted through the voice business device.

The user terminal supports a data channel, and supports business selection through a touch screen or a key. The user terminal may include various fixed terminals or various mobile terminals. Under the condition that a chip in the user terminal does not support the data channel, a native SDK is installed in the terminal before leaving factory to support the data channel technology, so that there is no need to install/uninstall a special application program at the user terminal.

In the embodiments of the present disclosure, the customer service system reserves the conventional IVR navigation function while providing an interactive menu for the user, and supports proper association and synchronization of contents over the audio/video channel and the data channel, so that the conventional customer service system can be upgraded into an interactive customer service system that is compatible with the conventional customer service system. The customer service system and the user terminal implement various forms of multimedia information pushing and interaction based on the data channel through the voice network and the voice business device on the basis of the original audio/video channel, and the user of the user terminal selects and uses the multimedia information according to his/her own habits. In the service process, the customer service system may collect information required for providing the service according to the selection and operation of the user. The customer service business implementation method provided in the embodiments of the present disclosure has the characteristics of intelligent interaction, and can solve the problems of lengthy IVR navigation and poor interactivity of conventional customer service. There are many types of typical customer service businesses. For example, while making a voice call, the customer service system may push a menu to allow a terminal user to click on the screen for selection. For example, while holding a voice call with the terminal user, the customer service system may provide remote guidance or the like by marking the screen of the user. The interactive customer service business has stronger functions, more visual interaction, more vivid experience and more efficient business handling, so that various existing scattered services can be integrated, the service quality and the operation level can be improved, and the working efficiency and the profit capacity can be increased.

According to the implementation schemes for various application scenarios in the embodiments of the present disclosure, audio/video calls and multimedia information interaction with a user terminal supporting a data channel can be implemented and supported, thereby implementing the intelligent customer service business with interactive service characteristics, and improving the business experience of the user.

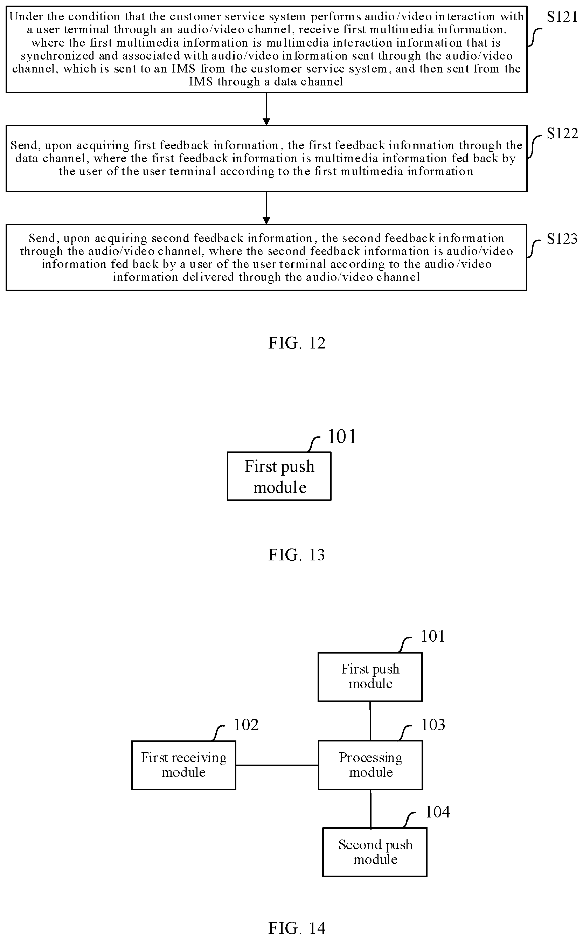

An embodiment of the present disclosure further provides a customer service business implementation method applied to a user terminal. As shown in FIG. 12, the method includes the following operations 121 to 123.

At operation 121, under the condition that the customer service system performs audio/video interaction with a user terminal through an audio/video channel, receiving first multimedia information, where the first multimedia information is multimedia interaction information that is synchronized and associated with audio/video information sent through the audio/video channel, which is sent to an IP Multimedia System (IMS) from the customer service system, and then sent from the IMS through a data channel.

At operation 122, sending, upon acquiring first feedback information, the first feedback information through the data channel, where the first feedback information is multimedia information fed back by the user of the user terminal according to the first multimedia information.

At operation 123, sending, upon acquiring second feedback information, the second feedback information through the audio/video channel, where the second feedback information is audio/video information fed back by a user of the user terminal according to the audio/video information delivered through the audio/video channel.

An embodiment of the present disclosure provides a customer service business implementation method applied to a user terminal, which includes: under the condition that the customer service system performs audio/video interaction with a user terminal through an audio/video channel, receiving first multimedia information, where the first multimedia information is multimedia interaction information that is synchronized and associated with audio/video information sent through the audio/video channel, which is sent to an IP Multimedia System (IMS) from the customer service system, and then sent from the IMS through a data channel; sending, upon acquiring first feedback information, the first feedback information through the data channel, where the first feedback information is multimedia information fed back by the user of the user terminal according to the first multimedia information; and sending, upon acquiring second feedback information, the second feedback information through the audio/video channel, where the second feedback information is audio/video information fed back by a user of the user terminal according to the audio/video information delivered through the audio/video channel. The customer service business implementation solution in the embodiment of the present disclosure can implement more intuitive interaction with a user, enable more lively user experience and more efficient business handling, and facilitate intuitive and vivid recommendation of products and services by enterprise users. The customer service system can integrate various scattered business, thereby enhancing and improving the functions of the customer service system, and facilitating improvement of the service quality and the operation level.

In the case where a chip in the user terminal does not support the data channel, a native Software Development Kit (SDK) may be installed before leaving factory to support the data channel, thereby avoiding installation/uninstallation of an application program at the user terminal.

In this case, in some embodiments, prior to receiving the first multimedia information, the customer service business implementation method may further include: establishing the data channel between the user terminal and the IMS according to a pre-installed SDK, where an access point to the data channel between the user terminal and the IMS is different from an access point to the audio/video channel. In other words, in the embodiments of the present disclosure, the access point of the data channel established based on the SDK is not the same as the access point of the IMS.

Based on the same technical concept, an embodiment of the present disclosure further provides a customer service system. As shown in FIG. 13, the customer service system includes a first push module 101 configured to, under the condition that the customer service system performs audio/video interaction with a user terminal through an audio/video channel, send first multimedia information to an IP Multimedia System (IMS) to request the IMS to establish a data channel between the IMS and the user terminal and send the first multimedia information to the user terminal through the data channel, where the first multimedia information is multimedia interaction information that is synchronized and associated with audio/video information sent through the audio/video channel, and is used for prompting a user of the user terminal to feed back information.

In some embodiments, as shown in FIG. 14, the customer service system further includes a first receiving module 102, a processing module 103, and a second push module 104.

The first receiving module 102 is configured to receive first feedback information sent from the user terminal through the data channel, where the first feedback information is multimedia information fed back by the user of the user terminal according to the first multimedia information. The processing module 103 is configured to generate second multimedia information according to the first feedback information, and generate first audio/video information that is synchronized and associated with the second multimedia information, where the second multimedia information is next-level multimedia interaction information of the first feedback information.

The first push module 101 is further configured to send the second multimedia information to the user terminal through the data channel.

The second push module 104 is configured to send the first audio/video information to the user terminal through the audio/video channel.

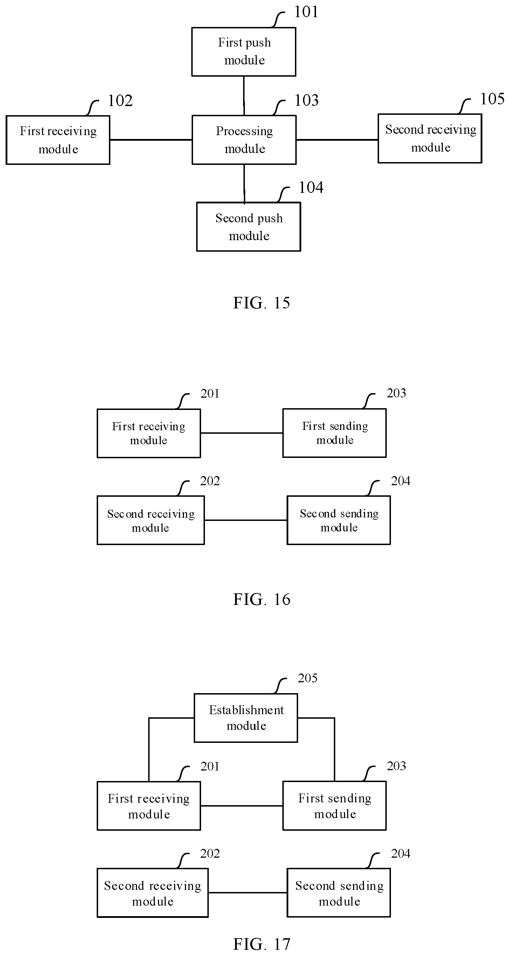

In some embodiments, as shown in FIG. 15, the customer service system further includes a second receiving module 105. The second receiving module 105 is configured to receive second feedback information sent from the user terminal through the audio/video channel, where the second feedback information is audio/video information fed back by a user of the user terminal according to the audio/video information delivered through the audio/video channel.

The processing module 103 is further configured to generate second audio/video information according to the second feedback information, and generate third multimedia information that is synchronized and associated with the second audio/video information, where the second audio/video information is next-level interaction information of the second feedback information.

The second push module 104 is further configured to send the second audio/video information to the user terminal through the audio/video channel.

The first push module 101 is further configured to send the third multimedia information to the user terminal through the data channel.

In some embodiments, the first push module 101 is configured to send a first push request carrying the first multimedia information to a voice business device, where the first push request is configured to instruct the voice business device to establish a first data channel between the voice business device and the IMS, send the first multimedia information to the IMS through the first data channel, and enable the voice business device to instruct the IMS to establish a second data channel between the IMS and the user terminal, so that the IMS sends the first multimedia information to the user terminal through the second data channel.

In some embodiments, the first receiving module 102 is configured to receive a first push response sent from the voice business device, acquire first feedback information carried therein which has been sent to the IMS from the user terminal through the second data channel, and send the first feedback information to the voice business device from the IMS through the first data channel.

The first push module 101 is configured to send a second push request carrying the second multimedia information to the voice business device, where the second push request is configured to instruct the voice business device to send the first multimedia information to the IMS through the second data channel, so that the IMS sends the second multimedia information to the user terminal through the second data channel.

In some embodiments, the customer service system further includes a Signal Conversion Unit (SCU), and the first push module 101 is configured to send the first push request carrying the first multimedia information to the voice business device through the SCU, and/or send the second push request carrying the second multimedia information to the voice business device through the SCU.

The first receiving module 102 is configured to receive the first push response sent from the voice business device through the SCU.

In some embodiments, the first push module 101 is configured to send a third push request carrying the first multimedia information to the IMS through a pre-established third data channel between the customer service system and the IMS, where the third push request is configured to instruct the IMS to establish a fourth data channel between the IMS and the user terminal, and send the first multimedia information to the user terminal through the fourth data channel.

In some embodiments, the first receiving module 102 is configured to receive a third push response sent from the IMS, and acquire first feedback information carried therein which has been sent to the IMS from the user terminal through the fourth data channel.

The first push module 101 is configured to send a fourth push request carrying the second multimedia information to the IMS, where the fourth push request is configured to instruct the IMS to send the second multimedia information to the user terminal through the fourth data channel.

Based on the same technical concept, an embodiment of the present disclosure further provides a user terminal. As shown in FIG. 16, the user terminal includes a first receiving module 201, a second receiving module 202, a first sending module 203, and a second sending module 204. The first receiving module 201 is configured to receive first multimedia information under the condition that the second receiving module 202 performs audio/video interaction with a customer service system through an audio/video channel, where the first multimedia information is multimedia interaction information that is synchronized and associated with audio/video information sent through the audio/video channel, which is sent to an IP Multimedia System (IMS) from the customer service system, and then sent from the IMS through a data channel.

The first sending module 203 is configured to send, upon acquiring first feedback information, the first feedback information through the data channel, where the first feedback information is multimedia information fed back by the user of the user terminal according to the first multimedia information.

The second sending module 204 is configured to send, upon acquiring second feedback information, the second feedback information through the audio/video channel, where the second feedback information is audio/video information fed back by a user of the user terminal according to the audio/video information delivered through the audio/video channel.

In some embodiments, as shown in FIG. 17, the user terminal further includes an establishment module 205. The establishment module 205 is configured to establish the data channel between the user terminal and the IMS according to a pre-installed Software Development Kit (SDK), where an access point to the data channel between the user terminal and the IMS is different from an access point to the audio/video channel.

An embodiment of the present disclosure further provides a computer device, including: at least one processor and a storage means. The storage means stores at least one program thereon which, when executed by the at least one processor, causes the at least one processor to implement the customer service business implementation method as described in any of the above embodiments.

An embodiment of the present disclosure further provides a computer-readable medium having a computer program stored thereon which, when executed, causes the customer service business implementation method as described in any of the above embodiments to be implemented.

Those of ordinary skill in the art will appreciate that all or some operations of the above described method, functional modules/units in the apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A customer service business implementation method applied to a customer service system, the method comprising:
under the condition that the customer service system performs audio/video interaction with a user terminal through an audio/video channel, sending first multimedia information to an IP Multimedia System, IMS, to request the IMS to establish a data channel between the IMS and the user terminal and send the first multimedia information to the user terminal through the data channel, wherein the first multimedia information is multimedia interaction information that is synchronized and associated with audio/video information sent through the audio/video channel, and is used for prompting a user of the user terminal to feed back information.

2. The method according to claim 1, wherein after sending the first multimedia information to the IMS to request the IMS to establish the data channel between the IMS and the user terminal and send the first multimedia information to the user terminal through the data channel, the method further comprises:
receiving first feedback information sent from the user terminal through the data channel, wherein the first feedback information is multimedia information fed back by the user of the user terminal according to the first multimedia information;
generating second multimedia information according to the first feedback information, and generating first audio/video information that is synchronized and associated with the second multimedia information, wherein the second multimedia information is next-level multimedia interaction information of the first feedback information; and
sending the second multimedia information to the user terminal through the data channel, and sending the first audio/video information to the user terminal through the audio/video channel.

3. The method according to claim 1, wherein after sending the first multimedia information to the IMS to request the IMS to establish the data channel between the IMS and the user terminal and send the first multimedia information to the user terminal through the data channel, the method further comprises:
receiving second feedback information sent from the user terminal through the audio/video channel, wherein the second feedback information is audio/video information fed back by a user of the user terminal according to the audio/video information delivered through the audio/video channel;
generating second audio/video information according to the second feedback information, and generating third multimedia information that is synchronized and associated with the second audio/video information, wherein the second audio/video information is next-level interaction information of the second feedback information; and
sending the second audio/video information to the user terminal through the audio/video channel, and sending the third multimedia information to the user terminal through the data channel.

4. The method according to claim 2, wherein sending the first multimedia information to the IMS to request the IMS to establish the data channel between the IMS and the user terminal and send the first multimedia information to the user terminal through the data channel comprises:
sending a first push request carrying the first multimedia information to a voice business device, wherein the first push request is configured to instruct the voice business device to establish a first data channel between the voice business device and the IMS, send the first multimedia information to the IMS through the first data channel, and enable the voice business device to instruct the IMS to establish a second data channel between the IMS and the user terminal, so that the IMS sends the first multimedia information to the user terminal through the second data channel.

5. The method according to claim 4, wherein
receiving the first feedback information sent from the user terminal through the data channel comprises:
receiving a first push response sent from the voice business device to acquire first feedback information carried therein, the first feedback information being sent to the IMS from the user terminal through the second data channel, and sending the first feedback information to the voice business device from the IMS through the first data channel; and
sending the second multimedia information to the user terminal through the data channel comprises:
sending a second push request carrying the second multimedia information to the voice business device, wherein the second push request is configured to instruct the voice business device to send the first multimedia information to the IMS through the second data channel, so that the IMS sends the second multimedia information to the user terminal through the second data channel.

6. The method according to claim 5, wherein the customer service system comprises a Signal Conversion Unit, SCU, and
wherein sending the first push request carrying the first multimedia information to the voice business device comprises: sending the first push request carrying the first multimedia information to the voice business device through the SCU; and/or
receiving the first push response sent from the voice business device comprises: receiving the first push response sent from the voice business device through the SCU; and/or
sending the second push request carrying the second multimedia information to the voice business device comprises: sending the second push request carrying the second multimedia information to the voice business device through the SCU.

7. The method according to claim 2, wherein sending the first multimedia information to the IMS to request the IMS to establish the data channel between the IMS and the user terminal and send the first multimedia information to the user terminal through the data channel comprises:
sending a third push request carrying the first multimedia information to the IMS through a pre-established third data channel between the customer service system and the IMS, wherein the third push request is configured to instruct the IMS to establish a fourth data channel between the IMS and the user terminal, and send the first multimedia information to the user terminal through the fourth data channel.

8. The method according to claim 7, wherein receiving the first feedback information sent from the user terminal through the data channel comprises:
receiving a third push response sent from the IMS to acquire first feedback information carried therein, the first feedback information being sent to the IMS from the user terminal through the fourth data channel; and
sending the second multimedia information to the user terminal through the data channel comprises:
sending a fourth push request carrying the second multimedia information to the IMS, wherein the fourth push request is configured to instruct the IMS to send the second multimedia information to the user terminal through the fourth data channel.

9. A customer service business implementation method applied to a user terminal, the method comprising:
under the condition that the customer service system performs audio/video interaction with a user terminal through an audio/video channel, receiving first multimedia information, wherein the first multimedia information is multimedia interaction information that is synchronized and associated with audio/video information sent through the audio/video channel, which is sent to an IP Multimedia System (IMS) from the customer service system, and then sent from the IMS through a data channel;
sending, upon acquisition of first feedback information, the first feedback information through the data channel, wherein the first feedback information is multimedia information fed back by the user of the user terminal according to the first multimedia information; and
sending, upon acquisition of second feedback information, the second feedback information through the audio/video channel, wherein the second feedback information is audio/video information fed back by a user of the user terminal according to the audio/video information delivered through the audio/video channel.

10. The method according to claim 9, wherein prior to receiving the first multimedia information, the method further comprises:
establishing the data channel between the user terminal and the IMS according to a pre-installed Software Development Kit, SDK, wherein an access point to the data channel between the user terminal and the IMS is different from an access point to the audio/video channel.

11. A customer service system comprising a first push module, wherein the first push module is configured to, under the condition that the customer service system performs audio/video interaction with a user terminal through an audio/video channel, send first multimedia information to an IP multimedia system, IMS, to request the IMS to establish a data channel between the IMS and the user terminal and send the first multimedia information to the user terminal through the data channel, wherein the first multimedia information is multimedia interaction information that is synchronized and associated with audio/video information sent through the audio/video channel, and is used for prompting a user of the user terminal to feed back information.

12. A user terminal comprising: a first receiving module, a second receiving module, a first sending module, and a second sending module, wherein
the first receiving module is configured to receive first multimedia information under the condition that the second receiving module performs audio/video interaction with a customer service system through an audio/video channel, wherein the first multimedia information is multimedia interaction information that is synchronized and associated with audio/video information sent through the audio/video channel, which is sent to an IP Multimedia System, IMS, from the customer service system, and then sent from the IMS through a data channel;
the first sending module is configured to send, upon acquisition of first feedback information, the first feedback information through the data channel, wherein the first feedback information is multimedia information fed back by the user of the user terminal according to the first multimedia information; and
the second sending module is configured to send, upon acquisition of second feedback information, the second feedback information through the audio/video channel, wherein the second feedback information is audio/video information fed back by a user of the user terminal according to the audio/video information delivered through the audio/video channel.

13. A computer device, comprising:
at least one processor; and
a storage means having at least one program stored thereon
wherein when executed by the at least one processor, the at least one program implements the customer service business implementation method according to any one of claims 1 to 10.

14. A computer-readable medium having a computer program stored thereon which, when executed by a processor, implements the customer service business implementation method according to any one of claims 1 to 10.
